(19) **Europäisches Patentamt / European Patent Office / Office européen des brevets**

(11) **EP 2 201 674 B1**

(12) **FASCICULE DE BREVET EUROPEEN**

(45) Date de publication et mention
de la délivrance du brevet:
**19.12.2012 Bulletin 2012/51**

(21) Numéro de dépôt: **08840543.6**

(22) Date de dépôt: **16.10.2008**

(51) Int Cl.:
*H02P 23/14* (2006.01)    *H02P 25/04* (2006.01)
*E05F 15/10* (2006.01)    *E06B 9/68* (2006.01)
*E05F 15/20* (2006.01)    *E06B 9/88* (2006.01)

(86) Numéro de dépôt international:
**PCT/IB2008/054250**

(87) Numéro de publication internationale:
**WO 2009/050664 (23.04.2009 Gazette 2009/17)**

(54) **PROCEDE D'ANALYSE DU FONCTIONNEMENT D'UN ACTIONNEUR ELECTROMECANIQUE POUR LA MANOEUVRE MOTORISEE D'UN ECRAN ET ACTIONNEUR POUR SA MISE EN OEUVRE**

VERFAHREN ZUR ANALYSE DES BETRIEBS EINES ELEKTROMECHANISCHEN AKTORS FÜR DIE ANGETRIEBENE STEUERUNG EINES BILDSCHIRMS UND AKTOR ZUR AUSFÜHRUNG

METHOD FOR ANALYSING THE OPERATION OF AN ELECTROMECHANICAL ACTUATOR FOR THE POWERED MANOEUVRE OF A SCREEN, AND ACTUATOR FOR IMPLEMENTING SAME

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.10.2007 FR 0707237**

(43) Date de publication de la demande:
**30.06.2010 Bulletin 2010/26**

(73) Titulaire: **Somfy SAS**
**74300 Cluses (FR)**

(72) Inventeurs:
• **GREHANT, Bernard**
**F-74300 Nancy-sur-Cluses (FR)**

• **TRANCHAND, Alain**
**F-74330 La Balme De Sillingy (FR)**
• **DUMONT D'AYOT, Geoffroy**
**F-74600 Seynod (FR)**

(74) Mandataire: **Bugnion Genève**
**Bugnion S.A.**
**Conseils en Propriété Industrielle**
**Route de Florissant 10**
**Case Postale 375**
**1211 Genève 12 (CH)**

(56) Documents cités:
**EP-A- 1 530 284    FR-A- 2 770 699**
**FR-A- 2 849 300    FR-A- 2 898 994**

**Description**

L'invention concerne un actionneur comprenant un moteur électrique utilisé pour manoeuvrer un élément mobile de fermeture, d'occultation, de protection solaire ou d'écran dans un bâtiment. L'invention est particulièrement utile lorsqu'on souhaite mesurer, à partir du comportement du moteur, les actions sur un élément mobile soumis aux effets de la gravitation, par exemple présentant des déplacements entre une position extrême inférieure et une position extrême supérieure provoqués par des mouvements de rotation du moteur.

Certains actionneurs destinés à être installés dans les bâtiments et destinés à la manoeuvre d'éléments de fermeture, d'occultation, de protection solaire ou d'écran (tels que par exemple des volets roulants, des portes, des portails ou des stores) comprennent un moteur à induction (ou moteur asynchrone) monophasé à condensateur permanent. L'invention est également applicable à des actionneurs comportant un moteur à induction de type triphasé, ou encore à des actionneurs comportant un moteur à courant continu à collecteur ou sans balais (BLDC).

Un réducteur est associé au moteur dans l'actionneur. Ce réducteur est partiellement irréversible ; c'est-à-dire qu'il a un rendement différent selon que c'est l'arbre d'entrée qui entraîne l'arbre de sortie ou que c'est l'arbre de sortie qui entraîne l'arbre d'entrée, le rendement étant en général inférieur lorsque c'est l'arbre de sortie qui entraîne l'arbre d'entrée.

Ces actionneurs sont alimentés par le réseau alternatif, par exemple 230 V 50 Hz, ou par une source continue.

Ils sont munis d'un frein d'immobilisation assurant le blocage de l'actionneur quand le moteur n'est pas alimenté. Le rôle du frein est essentiel, notamment en matière de sécurité. Il doit être activé par défaut, et s'opposer au couple d'entraînement provoqué par la gravité sur l'élément mobile, ce couple pouvant lui-même varier selon la position de l'élément mobile, notamment si celui-ci est enroulable, par exemple un volet roulant.

Le frein est souvent désactivé par le flux magnétique du stator du moteur quand il s'agit d'un moteur à induction, mais il est connu d'utiliser d'autres types de freins : électro-frein, frein à hystérésis, frein centrifuge, frein à rampe... L'usage de tels freins à rampe, appelés également « freins différentiels » ou « freins à transmission de couple » est particulièrement intéressant pour remplacer des électro-freins, des freins activés par le flux stator ou des freins à hystérésis. Ces freins différentiels ont particulièrement été étudiés par la demanderesse afin d'éviter que l'action du frein ne masque de manière importante la mesure indirecte du couple exercé par la charge sur l'actionneur lorsqu'on mesure en fait le couple fourni par le moteur.

Cependant, quel que soit le type de frein utilisé, il existe un problème résultant de l'irréversibilité partielle du réducteur : pour une variation donnée du couple de charge au niveau de la sortie de l'actionneur, la variation de couple moteur est différente selon que l'actionneur fonctionne en charge menée ou en charge menante.

Or, comme il a été relevé dans l'art antérieur, le fonctionnement en charge menée ou en charge menante ne dépend pas de manière simple du sens de rotation du moteur. Dans le cas d'un volet roulant ou similaire, commandé en fermeture à partir d'une position complètement enroulée, le moteur doit tout d'abord exercer un couple moteur pour pousser les lames en début de déroulement, puis il exerce un couple résistant (le moteur fonctionnant alors en générateur) lorsque la masse déroulée est suffisante pour que son poids dépasse l'action des frottements mécaniques. De même, dans le cas d'une porte de garage basculante qu'il faut d'abord pousser sur la partie principalement horizontale de la trajectoire, puis retenir sur la partie principalement verticale de cette trajectoire.

Dans le cas d'utilisation d'un frein différentiel, la situation est pire encore, puisque le moteur fonctionne toujours en moteur, que la charge soit menante ou menée : comment alors identifier l'état de la charge ?

Sans même qu'il soit utilisé un frein différentiel, l'identification d'une situation de charge menante ou de charge menée pose problème dès lors qu'il ne s'agit pas d'utiliser uniquement un moteur à courant continu à aimants et collecteur qui permet cette identification par simple mesure du sens du courant.

Dans le cas où un réducteur est présent, et plus son rendement est faible (par exemple inférieur à 80%), les pertes dans le réducteur suffisent à empêcher une telle détection fine : il faut en effet que la charge soit non-seulement menante mais de plus qu'elle fournisse une puissance supérieure aux pertes dans le réducteur pour provoquer l'inversion du sens du courant. Cet effet est d'autant plus marqué que le réducteur présente un caractère irréversible, c'est-à-dire un mauvais rendement quand il est entraîné par la charge.

Dans le cas d'utilisation d'un moteur à commutation électronique (MCE), par exemple un moteur de type brushless (BLDC), les pertes dans le dispositif d'alimentation sont également telles que c'est bien au-delà du passage dans une situation de charge menante que cela se traduit par un transfert inverse de puissance et la nécessité d'évacuer cette puissance au niveau du moteur.

De nombreux dispositifs de l'art antérieur prévoient de modifier le couple fourni par un moteur ou de modifier la sensibilité de détection d'un dispositif de détection d'obstacle en fonction de la position de l'élément mobile sur sa trajectoire, comme dans le brevet US 6,741,052. Cela oblige à des réglages par l'installateur, d'où une perte de temps, sans toutefois garantir que ce réglage est optimum. D'autres documents prévoient une détection d'effort selon deux techniques différentes pour valider le résultat d'une détection, comme dans le brevet US 6,940,240. Une autre solution décrite dans le brevet US 6,870,334 permet une mise à jour permanente de seuils de détection, mais nécessite la présence d'un véritable capteur d'effort sur l'élément mobile.

L'invention prévoit de remédier à ces inconvénients. Elle s'applique à tous les dispositifs cités, et principalement dans le cas où le frein est de type différentiel.

Le document EP 1 530 284 décrit un procédé de régulation de la vitesse d'un moteur à courant continu sans frein autre qu'un court-circuit de l'induit. Dans ce procédé, on détecte en permanence la vitesse du moteur en mesurant la tension à ses bornes et on accélère le moteur ou on le freine en fonction d'une comparaison entre la tension mesurée aux bornes du moteur et la tension aux bornes du générateur d'alimentation. Le freinage du moteur est obtenu en court-circuitant l'induit du moteur alors que le moteur n'est plus alimenté. La comparaison de la tension aux bornes de l'induit du moteur et aux bornes du générateur permet donc deux modes d'alimentation du moteur selon qu'il fonctionne en moteur ou qu'il fonctionne en générateur. Mais le fonctionnement réel en générateur du moteur ne correspond au fonctionnement en charge menante que dans le cas idéal où il n'existe pas de pertes de puissance, notamment dans un réducteur. Autrement dit, ce procédé de régulation de vitesse conduit à une vitesse régulée sensiblement supérieure à la vitesse à vide.

Le document FR 2 898 994 décrit un procédé de détection d'obstacle tenant compte de la nature de l'obstacle. Dans ce procédé, la valeur limite de couple à ne pas dépasser peut dépendre de la position de l'écran.

Le document FR 2 849 300 décrit un procédé de mesure du couple d'un moteur asynchrone à partir de la tension du condensateur de déphasage.

Le but de l'invention est de fournir un procédé d'analyse de l'état de fonctionnement d'un actionneur obviant aux inconvénients cités précédemment et améliorant les procédés de fonctionnement connus de l'art antérieur. En particulier, l'invention propose un procédé simple pour déterminer si une charge reliée à un actionneur est menée ou menante. L'invention propose en outre un procédé de fonctionnement d'un actionneur mettant en oeuvre un tel procédé d'analyse.

L'invention propose également un procédé d'apprentissage d'un actionneur mettant en oeuvre un tel procédé d'analyse, et un actionneur mettant en oeuvre l'un des procédés.

Le procédé de fonctionnement selon l'invention est défini par la revend ication 1.

Différents modes d'exécution du procédé de fonctionnement selon l'invention sont définis par les revendications 2 à 9.

Selon l'invention, un procédé d'apprentissage est défini par les revendications 10 et 11.

Selon l'invention, un actionneur électromécanique est défini par la revendication 12.

Le dessin annexé représente, à titre d'exemple, un mode de réalisation d'un procédé d'analyse selon l'invention et un dispositif d'actionneur permettant de mettre en oeuvre un tel procédé d'analyse.

La figure 1 est un schéma d'un mode de réalisation d'un actionneur permettant l'exécution d'un procédé d'analyse selon l'invention.

La figure 2 est un schéma représentant l'évolution de différents couples dans un actionneur en fonction du couple en entrée du réducteur de cet actionneur.

La figure 3 est un ordinogramme d'un procédé de fonctionnement d'un actionneur selon l'invention.

La figure 4 est un ordinogramme détaillé d'un exemple de réalisation de l'étape E2 du procédé de fonctionnement de la figure 3.

La figure 5 est un schéma de principe de détermination d'une donnée utilisée dans le procédé d'analyse selon l'invention.

La figure 6 est un schéma d'une variante d'un procédé de fonctionnement d'actionneur utilisant le procédé d'analyse selon l'invention.

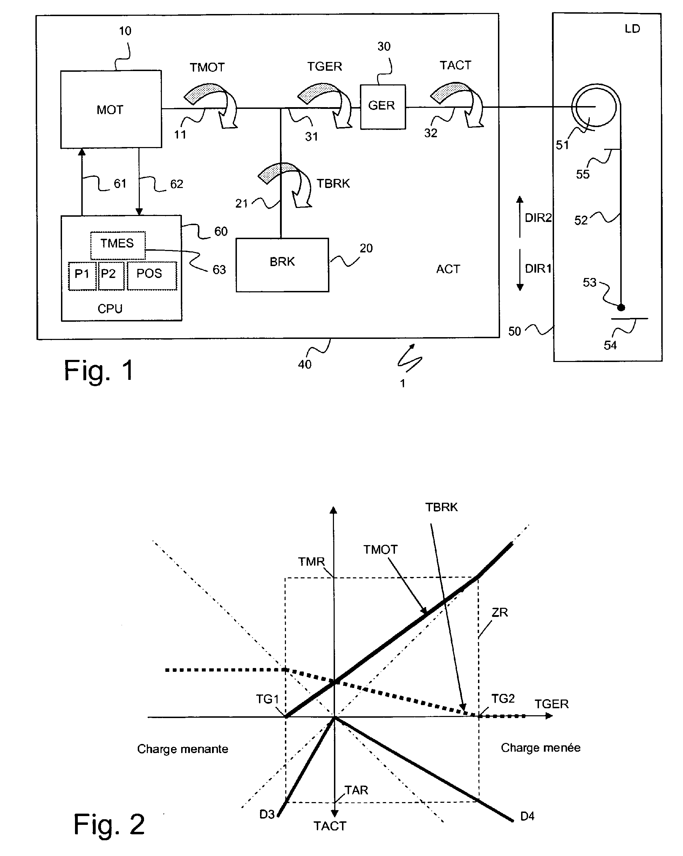

La figure 1 représente schématiquement une installation 1 comprenant un actionneur selon l'invention.

L'actionneur 40 est désigné par ACT. Il comprend un moteur 10, notamment un moteur à induction ou un moteur de type brushless, désigné par MOT, raccordé mécaniquement à un frein différentiel 20 désigné par BRK et à un réducteur 30 désigné par GER.

L'arbre de sortie du réducteur GER constitue la sortie mécanique de l'actionneur et entraîne un élément mobile dans un équipement 50, désigné par LD. Dans l'installation de la figure 1, cet élément mobile est enroulable sur un tube 51 entraîné en rotation par la sortie mécanique 32 de l'actionneur et comprend un tablier 52 dont une première extrémité est attachée au tube tandis qu'une deuxième extrémité 53 est lestée et guidée par des glissières non représentées.

Un premier sens de rotation du moteur provoque le mouvement vertical du tablier dans la première direction DIR1 : la charge est principalement « menante » relativement à l'actionneur. Un deuxième sens de rotation du moteur provoque le mouvement vertical du tablier dans la deuxième direction DIR2 : la charge est alors « menée » relativement à l'actionneur. Le mouvement en charge menante peut être interrompu par l'arrivée sur une première butée mécanique 54. Le mouvement en charge menée peut être interrompu par l'arrivée sur une deuxième butée mécanique 55.

En prenant une convention de définitions en « charge menée », on désigne par TMOT le couple fourni par le moteur sur l'arbre de sortie moteur 11, on désigne par TBRK le couple de freinage exercé par le frein en opposition au couple moteur, ce couple étant mesuré sur un plateau tournant 21 mobile en rotation, on désigne par TGER le couple fourni sur l'arbre d'entrée réducteur 31, ce couple résultant des actions antagonistes du moteur et du frein, et on désigne par TACT le couple fourni sur l'arbre de sortie réducteur 32, qui constitue le couple d'entraînement de la charge LD.

L'actionneur ACT comprend également dans un bloc de commande 60, désigné par CPU, des moyens de réception d'ordres de mouvement, des moyens de commande agissant sur l'alimentation 61 du moteur. Les paramètres électriques du moteur 62 sont transmis à des moyens d'estimation ou de mesure de couple 63, référencés TMES, permettant d'analyser les variations de couple moteur et d'agir sur la commande du moteur. Alternativement, les moyens de mesure analysent des variations de vitesse. Le bloc de commande comprend notamment des moyens logiciels pour régir le fonctionnement de l'actionneur. Il comprend notamment des moyens logiciels pour permettre un fonctionnement de l'actionneur selon les procédés objets de l'invention. En particulier, ces moyens logiciels comprennent des programmes informatiques.

Les moyens logiciels permettent notamment à l'actionneur de réagir différemment selon la valeur d'un ou plusieurs paramètres : par exemple, l'actionneur peut présenter un premier fonctionnement régi par un premier module logiciel lorsque la charge à laquelle il est lié est menée et peut présenter un deuxième fonctionnement régi par un deuxième module logiciel lorsque la charge à laquelle il est lié est menante. Ces deux fonctionnements concernent en particulier un premier processus P1 de détection (ou une première logique de détermination) d'une fin de course ou d'un obstacle P1 ou un deuxième processus P2 de détection (ou une deuxième logique de détermination) d'une fin de course ou d'un obstacle. Le premier ou le deuxième fonctionnement peuvent aussi concerner d'autres paramètres de fonctionnement de l'actionneur, par exemple une limitation électrique de la puissance de l'actionneur dès que la charge est détectée comme menante. L'actionneur comprend donc des moyens matériels et logiciels aptes à mettre en oeuvre les différentes étapes des procédés objets de l'invention et en particulier les différentes étapes définies par les revendications 1 à 10. Les deux logiques de détermination peuvent différer simplement par une valeur de paramètre, par exemple une valeur de seuil de détection.

Les deux quadrants supérieurs de la figure 2 représentent, avec une même échelle, le couple moteur TMOT et le couple exercé par le frein TBRK en fonction du couple fourni sur l'arbre d'entrée réducteur TGER. Cette figure correspond à un dimensionnement optimisé, permettant d'avoir une pente aussi élevée que possible (quand on ne tient pas compte des marges de sécurité) pour le couple moteur dans la zone de fonctionnement normal ZR de l'actionneur, délimitée par un rectangle en trait pointillé.

Le quadrant de droite correspond au fonctionnement en charge menée, tandis que le quadrant de gauche correspond au fonctionnement en charge menante.

Sur les quadrants inférieurs de la figure 2 sont également représentées les caractéristiques de couple de l'actionneur en fonction du couple réducteur, avec une même échelle (incluant le rapport de réduction). On a pris 0.65 et 0.55 comme valeurs respectives du rendement direct du réducteur EGERd et du rendement inverse du réducteur EGERi.

La droite D3, en trait gras, traduit donc la relation :

$$TGER = EGERi \times TACT ,$$

lorsque la charge entraîne le réducteur, tandis que la droite D4, en trait gras, traduit la relation :

$$TACT = EGERd \times TGER ,$$

lorsque le réducteur entraîne la charge.

La spécification de l'actionneur apparaît de manière simple sur la figure : on reporte d'abord le couple nominal de l'actionneur TAR et on en déduit, à partir des intersections avec les droites D3 et D4 les valeurs du couple réducteur nominal en charge menée TG2 ou menante TG1, ainsi que la valeur nominale TMR du couple moteur en charge menée. La zone de fonctionnement normal ZR s'inscrit dans le rectangle défini par ces valeurs.

Il est clair qu'une même variation de couple de sortie de l'actionneur est vue par l'entrée du réducteur :

- multipliée par le rendement inverse EGERi, en situation de charge menante,
- divisée par le rendement direct EGERd, en situation de charge menée,

et donc provoque deux valeurs respectives de variation de couple moteur qui sont elles-mêmes dans un rapport égal au produit EGERd x EGERi, (dans notre exemple égal à 0.65 x 0.55 = 0.36) dans le cas d'un frein désactivé par le flux magnétique stator ou d'un électro-frein. Dans le cas d'un frein différentiel, on se rapproche d'autant plus de cette valeur que le couple TG2 est petit devant le couple TG1.

Pour une même variation du couple de sortie de l'actionneur, le moteur voit donc des variations de couple presque trois fois plus faibles en charge menante qu'en charge menée. Il en résulte l'impossibilité de détecter finement un obstacle si l'état de la charge n'est pas analysé.

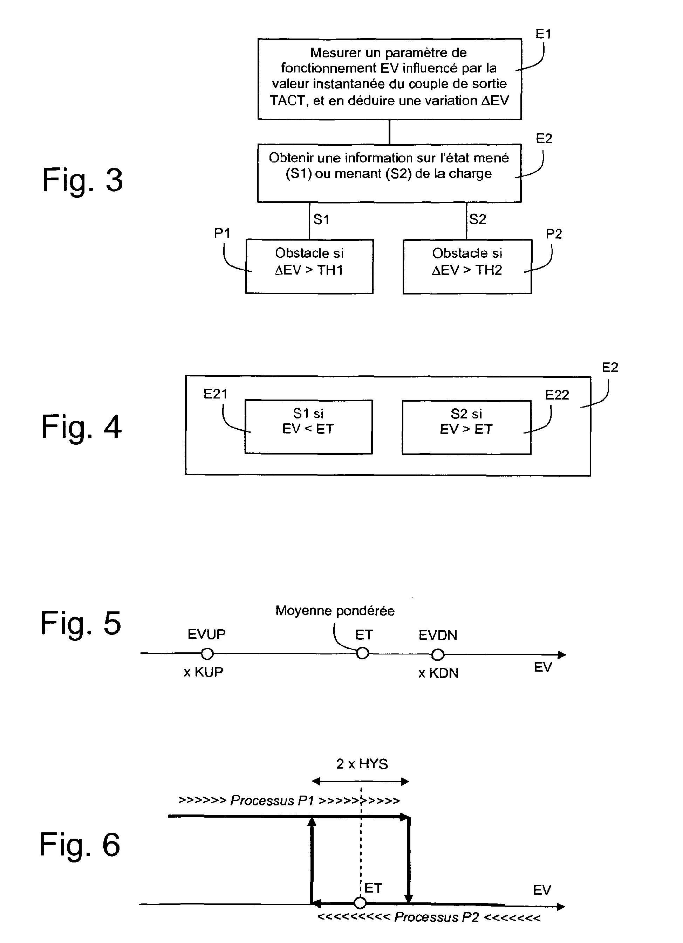

La figure 3 représente le procédé de détection selon l'invention.

Dans une première étape E1, on mesure un paramètre de fonctionnement EV variable, influencée par la valeur instantanée du couple de sortie de l'actionneur TACT. Ce paramètre EV est le couple du moteur ou préférentiellement une grandeur proportionnelle au couple moteur (par exemple l'intensité du courant statorique s'il s'agit d'un moteur à courant continu) ou une grandeur variant de manière connue avec le couple moteur (par exemple la tension aux bornes du condensateur de déphasage s'il s'agit d'un moteur à induction monophasé).

Alternativement, le paramètre de fonctionnement EV est la vitesse du rotor.

Alternativement, si le moteur est de type à commutation électronique (MCE), par exemple de type brushless (BLDC), le paramètre de fonctionnement EV est le courant moyen absorbé par le circuit d'alimentation du moteur (par exemple un inverseur triphasé), ou encore une grandeur variable de ce circuit, par exemple un angle de phase relatif à la mise en conduction de transistors contenus dans ce circuit.

Dans tous les cas, le paramètre de fonctionnement EV est transmis au bloc de commande CPU sous forme de paramètres électriques 62.

Le processus est itéré dans le temps de manière non seulement à mesurer le paramètre de fonctionnement EV mais à calculer sa variation ΔEV.

Dans une deuxième étape E2, selon les méthodes détaillées plus bas, on obtient une information sur l'état de la charge : soit la charge est menée (état S1), soit la charge est menante (état S2).

Préférentiellement, le paramètre de fonctionnement EV est utilisé pour obtenir cette information.

Si la charge est menée, alors un premier processus de détection P1 est activé. Si la charge est menante, alors un deuxième processus de détection P2 est activé.

Le premier processus de détection compare la variation mesurée ΔEV du paramètre de fonctionnement à un premier seuil TH1 et conclut à la présence d'un obstacle si ce seuil est dépassé.

Le deuxième processus de détection compare la variation mesurée ΔEV du paramètre de fonctionnement à un deuxième seuil TH2 et conclut à la présence d'un obstacle si ce seuil est dépassé. Le deuxième seuil est plus faible que le premier seuil, préférentiellement multiplié par le produit des rendements direct et inverse du réducteur.

Par exemple, le deuxième seuil est trois fois plus faible (ou au moins deux fois plus faible) que le premier seuil.

Alternativement, les deux processus utilisent un même seuil TH, mais le dispositif de mesure contient un moyen d'amplification présentant une première amplification A1 du signal mesuré lorsque la charge est menée et une deuxième amplification A2 du signal mesuré lorsque la charge est menée, la deuxième amplification étant supérieure à la première et, de préférence, dans le rapport précédent. Par exemple, la deuxième amplification est trois fois supérieure (ou au moins deux fois) à la première. Il y aura détection si : A1 x ΔEV > TH, ou si : A2 x ΔEV > TH, selon le processus de détection activé.

Alternativement, les processus sont construits avec des sous-programmes différents pour également tenir compte d'autres particularités liées à la nature de l'élément mobile et/ou de l'actionneur.

Alternativement la deuxième étape E2 précède la première étape E1, par exemple dans le cas où l'information sur l'état mené ou menant de la charge est obtenu en utilisant la mesure d'une autre grandeur que le paramètre de fonctionnement influencé par la valeur instantanée du couple de sortie.

Dans l'art antérieur, une information sur l'état de la charge se déduit facilement du signe du courant statorique dans le cas d'un moteur DC avec électro-frein : si le courant est positif, alors la charge est menée, si le courant est négatif, alors la charge est menante. L'information est alors obtenue directement sans recourir à l'invention.

Par contre, un même moteur DC muni d'un frein à transmission de couple (ou frein différentiel) pose problème puisque le courant moteur est toujours de même signe (pas d'inversion de couple moteur).

Dans le cas d'un moteur asynchrone (ou moteur à induction), l'information sur l'état de la charge se déduit de la vitesse du rotor par comparaison avec la valeur de la vitesse à vide (proche de la vitesse de synchronisme). Alternativement, on utilise la tension aux bornes du condensateur de déphasage, qui est en relation avec la vitesse.

Dans le cas d'un frein différentiel, d'un réducteur partiellement irréversible, et de même avec un moteur à induction monophasé ou avec un moteur brushless, il est donc indispensable de recourir à une estimation de l'état de la charge, basée sur la comparaison du paramètre de fonctionnement EV (courant, vitesse, tension condensateur) avec une grandeur de référence (ou de seuil) ET correspondant autant que possible à un fonctionnement à charge nulle, comme représenté en figure 4. ET est par exemple la vitesse du rotor moteur quand la charge sur l'actionneur est nulle.

On a :

EV < ET : charge menée, état S1
EV > ET : charge menante, état S2.

De manière idéale, un essai suffit à enregistrer dans une mémoire de l'actionneur la valeur de la grandeur de référence, valeur mémorisée qu'on désigne alors par ET0.

Cependant, la grandeur de référence ET dépend notamment de la température frein, de l'usure des garnitures, du ressort agissant sur le plateau, de la tension d'alimentation, des pertes dans le réducteur, etc. Elle doit donc être mise à jour au moins périodiquement, et si possible en début de toute nouvelle manoeuvre, ou doit être au moins recalculée à partir de la valeur mémorisée ET0.

Le paramètre de fonctionnement EV dépend lui-même de tous ces paramètres. Il doit donc être comparé non pas à la valeur mémorisée ET0 mais à une valeur ET actualisée en fonction de la température courante T, comparée à celle de l'enregistrement T0, et en fonction de la tension courante U, comparée à celle de l'enregistrement U0. Cette actualisation est calculée au moins avec une approximation linéaire :

$$ET = ET0 \times F1(T/T0) \times F2 (U/U0) \times K. \quad (1)$$

F1 et F2 étant des fonctions analytiques ou tabulées, déduites d'essais.

K est un coefficient d'usure composite, intégrant par exemple l'usure du ressort, et celle de la garniture du frein)

Mais, de préférence, un essai proche de l'essai véritablement à vide permet de réactualiser, juste avant la manoeuvre, la grandeur ET servant de référence.

Un premier type d'essai peut consister à s'écarter un peu de la position fin de course haute FCH (1 à 2 secondes de mouvement) et à mesurer EV dans les deux sens (EVDN en descente puis EVUP en montée) puis faire la moyenne pour obtenir ET. En effet, pour la plupart des éléments mobiles, l'effort à fournir est très faible au voisinage de la position haute. Si la fin de course haute est caractérisée par une butée mécanique, on s'écarte d'abord de cette butée avant de réaliser l'essai afin d'être certain de ne pas la rencontrer dans le mouvement de retour.

Ce premier type d'essai peut aussi être mis en oeuvre dans une position intermédiaire : le fait de prendre la moyenne du bref mouvement d'aller-retour permet d'obtenir une valeur proche de ce que serait le paramètre de fonctionnement dans un véritable essai à vide. On obtient une précision meilleure encore en pondérant les mesures EVUP et EVDN par les rendements dans le cas où le paramètre de fonctionnement est au moins sensiblement proportionnel au couple.

La figure 5 donne un exemple de détermination de la grandeur de référence ET lorsqu'un bref mouvement d'aller-retour est effectué à partir d'une position intermédiaire. Dans le mouvement de descente, en charge menante, on mesure un paramètre de fonctionnement (par exemple la vitesse du rotor) égale à EVDN. Dans le mouvement de montée, en charge menée, on mesure un paramètre de fonctionnement égal à EVUP. Or tout se passe comme si la charge avait varié dans le rapport du produit des rendements (par exemple d'un facteur 3). Si on affecte à la mesure EVUP un premier coefficient de pondération KUP égal à 1, alors on affecte à la mesure EVDN un deuxième coefficient de pondération KDN égal à l'inverse du produit EGERd x EGERi, et la valeur de la grandeur de référence est la moyenne des mesures pondérées.

Alternativement, l'essai n'est réalisé que dans une seule direction : par exemple en descente au voisinage de la fin de course haute.

Un deuxième type d'essai consiste à profiter d'un jeu existant (par exemple lors du dépilement de lames ajourées) (voire créer un jeu volontaire) en position basse FCB et à mesurer EV en début de montée : lors du rattrapage de jeu, la charge est nulle ou presque.

On enregistre chaque fois la dernière valeur de la grandeur de référence ET comme valeur mémorisée ET0.

Ainsi, au cours d'un cycle de fonctionnement quelconque, si la position de départ ne permet pas de déterminer ET, par exemple parce qu'il n'y a pas de jeu et que l'élément mobile était arrêté à mi-course et qu'on s'interdit un bref mouvement d'aller-retour, alors il suffit d'appliquer l'équation (1) dans laquelle on considère que K = 1 (pas d'usure notable depuis le dernier enregistrement), et dans laquelle les valeurs de F1 et F2 sont lues dans des tables. La tension U est mesurée en tant que telle.

Si la température T n'est pas mesurée, elle peut cependant être déduite de la valeur prise par EV au moment précis où le moteur est mis sous tension, ou par d'autres moyens indirects connus de l'homme du métier.

Pour une meilleure exécution, le procédé selon l'invention prévoit une plage de recouvrement avec hystérésis, comme indiqué sur la figure 6.

Le deuxième processus n'est activé que lorsque le paramètre de fonctionnement EV dépasse la valeur de la grandeur de référence ET d'une quantité égale à l'hystérésis HYS, mais reste actif tant qu'on n'est pas redescendu au dessous de cette grandeur de référence à nouveau d'une quantité égale à l'hystérésis. Inversement pour le premier processus.

Alternativement, et de manière préférée, les deux processus sont activés en permanence, mais c'est le résultat de l'un ou de l'autre qui est pris en considération selon l'information sur l'état de la charge.

Il faut noter que dans le cas où on a clairement identifié une situation de charge menante, on met en oeuvre le deuxième processus P2 qui est plus sensible que le premier processus P1. De ce fait, dès que la charge passe de menante à menée (passage du seuil réel), le simple changement de rendement du réducteur suffit à conclure à la détection d'obstacle.

La plage de recouvrement n'est donc nullement pénalisante dans ce cas.

Le recours au double processus décrit dans l'invention :

- ne dégrade pas la détection actuelle sur conditions de charge menée,
- rend très efficace la détection de passage menante-menée,
- permet de faire une détection plus précise en conditions de charge menante.

Plus l'estimation est précise, plus faible est la plage d'hystérésis.

Un avantage supplémentaire de l'invention est de faciliter la détection automatique du type d'élément mobile entraîné par l'actionneur, puisque le point de passage de charge menée à charge menante est une caractéristique essentielle permettant de distinguer deux volets roulants ou encore un volet roulant, un store de façade, un store de terrasse etc. L'invention peut enfin être combinée avec les enseignements de l'art antérieur pour faire varier les seuils de détection avec la position, de manière continue ou par zone.

L'invention peut aussi être utilisée de manière périodique seulement, dans des cycles d'apprentissage ou de maintenance, pour identifier et enregistrer une position de changement d'état de la charge, ou plusieurs positions de changement d'état de la charge le long de la trajectoire, et remettre périodiquement à jour ces positions de changement d'état.

L'invention peut également être utilisée dans un premier cycle d'apprentissage pour identifier un sens de déplacement de l'élément mobile, donc distinguer un mouvement de montée d'un mouvement de descente et permettre ainsi la mise en correspondance automatique d'un sens de rotation du moteur (Sens 1 ou Sens 2) avec un ordre de commande de mouvement (Montée ou Descente) envoyé à l'actionneur.

Dans ce cas, les différents processus de détection seront activés en fonction de l'indication d'un capteur de position, par rapport aux positions de changement d'état enregistrées. L'enregistrement des positions dans lesquelles la charge est menante et des positions dans lesquelles la charge est menée est réalisé dans une mémoire POS du bloc de commande CPU.

On entend par « frein différentiel » un frein agissant automatiquement dès que la charge a tendance a entraîner le moteur. Ainsi, il existe un couple que doit fournir le moteur lorsque le couple de la charge due à l'élément mobile s'exerce dans le même sens que celui du moteur. C'est-à-dire que, même lorsque le couple créé par l'élément mobile du fait des forces de gravitation tend à entraîner celui-ci dans le sens de son déplacement commandé par le moteur, le fonctionnement du moteur est tout de même du type « moteur » et non du type « générateur ». Dans certaines situations, ce couple fourni par le moteur est sensiblement constant lorsque le couple créé par l'élément mobile tend à entraîner celui-ci dans le sens de son déplacement commandé par le moteur. Un exemple de frein différentiel est un frein à rampe comprenant des disques de friction rappelés en contact l'un contre l'autre et pouvant être écartés l'un de l'autre par une action d'un arbre d'entrée sur une rampe hélicoïdale d'un des disques. Un autre exemple de frein différentiel est un frein à ressort comme décrit dans le brevet EP 0 976 909.

## Revendications

1. Procédé de fonctionnement d'un actionneur (1) de manoeuvre d'un élément mobile (52), comprenant un moteur (10) de type asynchrone ou de type brushless ou comprenant un moteur associé à un frein différentiel (20), et comprenant un réducteur (30) partiellement irréversible, le procédé comprenant une étape d'établissement d'une mesure d'un paramètre de fonctionnement ($\Delta$EV) de l'actionneur et une étape d'utilisation de cette mesure pour déterminer si l'actionneur mène l'élément mobile ou si l'actionneur est mené par l'élément mobile, **caractérisé en ce que** le procédé comprend une étape de mise en oeuvre d'une première logique de détermination d'une fin de course ou d'un obstacle, ou une étape de mise en oeuvre d'une deuxième logique de détermination d'une fin de course ou d'un obstacle, selon que l'actionneur mène l'élément mobile ou que l'actionneur est mené par l'élément mobile.

2. Procédé de fonctionnement selon la revendication 1, **caractérisé en ce qu'**il comprend une étape préliminaire de détermination d'une première valeur seuil du paramètre et **en ce que** l'étape d'utilisation de la mesure comprend une comparaison de la mesure à la première valeur seuil.

3. Procédé de fonctionnement selon la revendication 2, **caractérisé en ce que** la première valeur seuil est la valeur du paramètre lorsque l'actionneur fonctionne à vide.

4. Procédé de fonctionnement selon la revendication 2 ou 3, **caractérisé en ce que** l'étape préliminaire de détermination comprend un enchaînement de deux mouvements de manoeuvre de l'élément mobile dans deux sens opposés, deux mesures du paramètre de fonctionnement, une dans chacun des sens de manoeuvre, et un établissement de la première valeur seuil à partir des deux mesures.

5. Procédé de fonctionnement selon la revendication 4, **caractérisé en ce que** l'étape d'établissement de première valeur seuil comprend une opération de calcul d'une moyenne des deux mesures du paramètre de fonctionnement.

6. Procédé de fonctionnement selon l'une des revendications précédentes, **caractérisé en ce que** le paramètre est la vitesse de rotation du moteur ou le courant d'alimentation du moteur ou, dans le cas d'un moteur à induction, la tension du condensateur de déphasage du moteur ou, dans le cas d'un moteur à commutation électronique, le courant moyen absorbé par le circuit d'alimentation du moteur.

7. Procédé de fonctionnement selon l'une des revendications précédentes, **caractérisé en ce qu'**il comprend une étape d'analyse du fonctionnement de l'actionneur comprenant :

   - une phase préliminaire de détermination d'une deuxième valeur seuil d'un paramètre de fonctionnement de l'actionneur, et
   - une phase préliminaire de détermination d'une troisième valeur seuil du paramètre, supérieure à la deuxième valeur seuil,

   et **en ce que** la première logique de détermination des fins de course ou d'un obstacle est mise en oeuvre dès que la valeur du paramètre devient supérieure à la troisième valeur seuil et tant qu'elle reste supérieure à la deuxième valeur et la deuxième logique de détermination des fins de course ou d'un obstacle est mise en oeuvre dès que la valeur du paramètre devient inférieure à la deuxième valeur seuil et tant qu'elle reste inférieure à la troisième valeur.

8. Procédé de fonctionnement selon l'une des revendications précédentes, **caractérisé en ce que**, dans la première logique de détermination des fins de course ou d'un obstacle, une fin de course ou un obstacle est détecté par dépassement d'une quatrième valeur seuil et **en ce que**, dans la deuxième logique de détermination des fins de course ou d'un obstacle, une fin de course ou un obstacle est détecté par dépassement d'une cinquième valeur seuil.

9. Procédé de fonctionnement selon la revendication 8, **caractérisé en ce que** le rapport des quatrième et cinquième valeurs seuil est au moins sensiblement égal au produit des rendements direct et inverse du réducteur de l'actionneur.

10. Procédé d'apprentissage d'un actionneur de manoeuvre d'un élément mobile, **caractérisé en ce qu'**il comprend la mise en oeuvre du procédé de fonctionnement selon l'une des revendications 1 à 9 dans :

    - une étape d'enregistrement des positions dans lesquelles l'actionneur mène l'élément mobile et des positions dans lesquelles l'actionneur est mené par l'élément mobile, et/ou
    - une étape de détection automatique du type d'élément mobile à partir d'un point de passage de charge menée à charge menante, et/ou
    - une étape de détermination du sens de déplacement de l'élément mobile.

11. Procédé d'apprentissage selon la revendication 10, **caractérisé en ce que** l'étape d'identification du sens de déplacement de l'élément mobile permet la mise en correspondance automatique d'un sens de rotation du moteur (Sens 1 ou Sens 2) avec un ordre de commande de mouvement (Montée ou Descente) envoyé à l'actionneur.

12. Actionneur électromécanique (1) pour la manoeuvre d'un élément mobile comprenant des moyens matériels et logiciels pour mettre en oeuvre un procédé selon l'une des revendications précédentes, les moyens comprenant un bloc de commande, un moteur (10), un frein différentiel (20), un réducteur (30) et des moyens d'estimation ou de mesure de couple (63) et permettant d'analyser les variations de couple moteur et d'agir sur la commande du moteur et le bloc de commande permettant à l'actionneur de réagir différemment selon la valeur d'un paramètre, l'actionneur présentant un premier fonctionnement régi par un premier module logiciel mettant en oeuvre une première logique de détermination d'une fin de course ou d'un obstacle lorsque la charge à laquelle l'actionneur est lié est menée et présentant un deuxième fonctionnement régi par un deuxième module logiciel mettant en oeuvre une deuxième logique de détermination d'une fin de course ou d'un obstacle lorsque la charge à laquelle l'actionneur est lié est menante.

13. Actionneur selon la revendication précédente, **caractérisé en ce que** les moyens matériels et logiciels comprennent une mémoire (POS) d'enregistrement des positions de l'actionneur dans lesquelles la charge est menante et des positions de l'actionneur dans lesquelles la charge est menée.

**Claims**

1. A method of operating an actuator (1) for maneuvering a movable element (52), comprising a motor (10) of induction type or of brushless type or comprising a motor associated with a differential brake (20), and comprising a partially irreversible reduction gear (30), the method comprising a step of establishing a measurement of an operating parameter ($\Delta$EV) of the actuator and a step of using this measurement to determine whether the actuator is driving the movable element or whether the actuator is being driven by the movable element, **characterized in that** the method comprises a step of implementing first logic for determining an end of travel or an obstacle, or a step of implementing second logic for determining an end of travel or an obstacle, depending on whether the actuator drives the movable element or the actuator is driven by the movable element.

2. The operating method as claimed in claim 1, which comprises a preliminary step of determining a first threshold value of the parameter and in that the step of using the measurement comprises a comparison of the measurement with the first threshold value.

3. The operating method as claimed in claim 2, wherein the first threshold value is the value of the parameter when the actuator is operating in no-load mode.

4. The operating method as claimed in claim 2 or 3, wherein the preliminary determination step comprises a series of two maneuver movements of the movable element in two opposite directions, two measurements of the operating parameter, one in each of the directions of maneuver, and an establishment of the first threshold value on the basis of the two measurements.

5. The operating method as claimed in claim 4, wherein the step of establishing the first threshold value comprises a procedure for calculating a mean of the two measurements of the operating parameter.

6. The operating method as claimed in one of the preceding claims, wherein the parameter is the rotation speed of the motor or the power supply current of the motor or, in the case of an induction motor, the voltage of the phase-shift capacitor of the motor or, in the case of an electronic commutation motor, the mean current absorbed by the power supply circuit of the motor.

7. The operating method as claimed in one of the preceding claims, which comprises a step of analyzing the operation of the actuator comprising:

    - a preliminary phase of determining a second threshold value of an operating parameter of the actuator, and
    - a preliminary phase of determining a third threshold value of the parameter, greater than the second threshold value,

    and in that the first logic for determining the ends of travel or an obstacle is implemented as soon as the value of the parameter becomes greater than the third threshold value and as long as it remains greater than the second value and the second logic for determining the ends of travel or an obstacle is implemented as soon as the value of the parameter becomes less than the second threshold value and as long as it remains less than the third value.

8. The operating method as claimed in one of the preceding claims, wherein, in the first logic for determining the ends of travel or an obstacle, an end of travel or an obstacle is detected by the exceeding of a fourth threshold value and in that, in the second logic for determining the ends of travel or an obstacle, an end of travel or an obstacle is detected by the exceeding of a fifth threshold value.

9. The operating method as claimed in claim 8, wherein the ratio of the fourth and fifth threshold values is at least substantially equal to the product of the forward and reverse efficiencies of the reduction gear of the actuator.

10. A learning method for an actuator for maneuvering a movable element, which comprises the implementation of the operating method as claimed in one of claims 1 to 9 in:

- a step of recording the positions in which the actuator drives the movable element and the positions in which the actuator is driven by the movable element, and/or
- a step of automatically detecting the type of movable element on the basis of a point of switchover from driven load to driving load, and/or
- a step of determining the direction of displacement of the movable element.

11. The learning method as claimed in claim 10, wherein the step for identifying the direction of displacement of the movable element allows the automatic matching of a direction of rotation of the motor (Direction 1 or Direction 2) with a movement control command (Up or Down) sent to the actuator.

12. An electromechanical actuator (1) for maneuvering a movable element comprising hardware (60) and software means for implementing a method as claimed in one of the preceding claims, the means comprising a control block, a motor (10), a reduction gear (30) and torque estimation or measurement means (63) making it possible to analyze the motor torque variations and to act on the control of the motor and the control block allowing the actuator to react differently according to the value of a parameter, the actuator exhibiting a first manner of operation governed by a first software module implementing a first logic for determining an end of travel or an obstacle when the load to which it is tied is driven and exhibiting a second manner of operation governed by a second software module implementing a second logic for determining an end of travel or an obstacle when the load to which it is tied is driving.

13. The actuator as claimed in the preceding claim, wherein the hardware and software means comprise a memory (POS) for recording the positions of the actuator in which the load is driving and the positions of the actuator in which the load is driven.

**Patentansprüche**

1. Betriebsverfahren eines Stellglieds (1) zur Betätigung eines mobilen Elementes (52), das einen Motor (10) vom asynchronen Typ oder vom Brushless-Typ umfasst oder einen Motor, der mit einer Differentialbremse (20) kombiniert ist, und ein teilweise irreversibles Getriebe (30) umfasst, wobei das Verfahren einen Ermittlungsschritt eines Messwerts eines Betriebsparameters (ΔEV) des Stellglieds und einen Schritt der Verwendung dieses Messwerts umfasst, um zu bestimmen, ob das Stellglied das mobile Element führt oder ob das Stellglied von dem mobilen Element geführt wird, **dadurch gekennzeichnet, dass** das Verfahren einen Schritt der Umsetzung einer ersten Bestimmungslogik einer Endlage oder eines Hindernisses oder einen Schritt der Umsetzung einer zweiten Bestimmungslogik einer Endlage oder eines Hindernisses umfasst, je nachdem, ob das Stellglied das mobile Element führt oder ob das Stellglied von dem mobilen Element geführt wird.

2. Betriebsverfahren nach Anspruch 1, **dadurch gekennzeichnet, dass** es einen vorbereitenden Bestimmungsschritt eines ersten Schwellenwerts des Parameters umfasst und dass der Benutzungsschritt des Messwerts einen Vergleich des Messwerts mit dem ersten Schwellenwert umfasst.

3. Betriebsverfahren nach Anspruch 2, **dadurch gekennzeichnet, dass** der erste Schwellenwert der Wert des Parameters ist, wenn das Stellglied im Leerlauf läuft.

4. Betriebsverfahren nach Anspruch 2 oder 3, **dadurch gekennzeichnet, dass** der vorbereitende Bestimmungsschritt eine Verkettung von zwei Betätigungsbewegungen des mobilen Elements in zwei entgegengesetzte Richtungen, zwei Messungen des Betriebsparameters, eine in jede der Betätigungsbewegungen, und eine Ermittlung des ersten Schwellenwert auf der Basis der zwei Messungen, umfasst.

**5.** Betriebsverfahren nach Anspruch 4, **dadurch gekennzeichnet, dass** der Ermittlungsschritt des ersten Schwellenwerts eine Berechnungsoperation eines Durchschnitts der zwei Messwerte des Betriebsparameters umfasst.

**6.** Betriebsverfahren nach einem der vorangehenden Ansprüche, **dadurch gekennzeichnet, dass** der Parameter die Drehgeschwindigkeit des Motors oder der Versorgungsstrom des Motors oder, bei einem Induktionsmotor, die Spannung des Phasenverschiebungs-Kondensators oder, bei einem Motor mit elektronischer Schaltung, der vom Versorgungskreis des Motors absorbierte durchschnittliche Strom ist.

**7.** Betriebsverfahren nach einem der vorangehenden Ansprüche, **dadurch gekennzeichnet, dass** es einen Analyseschritt des Betriebs des Stellglieds umfasst, der umfasst:

- eine vorbereitende Bestimmungsphase eines zweiten Schwellenwerts eines Betriebsparameters des Stellglieds und
- eine vorbereitende Bestimmungsphase eines dritten Schwellenwerts des Parameters, der größer als der zweite Schwellenwert ist,

und dadurch, dass die erste Bestimmungslogik der Endlagen oder eines Hindernisses umgesetzt wird, sobald der Wert des Parameters größer wird als der dritte Schwellenwert und solange er größer bleibt als der zweite Wert und die zweite Bestimmungslogik der Endlagen oder eines Hindernisses umgesetzt wird, sobald der Wert des Parameters kleiner als der zweite Schwellenwert wird und solange er kleiner als der dritte Wert bleibt.

**8.** Betriebsverfahren nach einem der vorangehenden Ansprüche, **dadurch gekennzeichnet, dass** in der ersten Bestimmungslogik der Endlagen oder eines Hindernisses eine Endlage oder ein Hindernis durch Überschreiten eines vierten Schwellenwerts ermittelt wird und dass in der zweiten Bestimmungslogik der Endlagen oder eines Hindernisses eine Endlage oder ein Hindernis durch Überschreiten eines fünften Schwellenwerts ermittelt wird.

**9.** Betriebsverfahren nach Anspruch 8, **dadurch gekennzeichnet, dass** das Verhältnis des vierten und fünften Schwellenwerts mindestens etwa gleich dem Produkt der direkten und inversen Leistung des Getriebes des Stellglieds ist.

**10.** Lernverfahren eines Stellglieds zur Betätigung eines mobilen Elements, **dadurch gekennzeichnet, dass** es die Umsetzung des Betriebsverfahrens nach einem der Ansprüche 1 bis 9 umfasst in:

- einem Registrierungsschritt der Positionen, in die das Stellglied das mobile Element führt und der Positionen, in die das Stellglied vom mobilen Element geführt wird, und/oder
- einem automatischen Ermittlungsschritt des Typs des mobilen Elements ausgehend von einem Punkt des Übergangs von einer geführten Last zu einer führenden Last und/oder
- einem Bestimmungsschritt der Verlagerungsrichtung des mobilen Elements.

**11.** Lernverfahren nach Anspruch 10, **dadurch gekennzeichnet, dass** der Identifizierungsschritt der Verlagerungsrichtung des mobilen Elements die automatische Abstimmung einer Drehrichtung des Motors (Richtung 1 oder Richtung 2) mit einem an das Stellglied geschickten Befehl zur Bewegungssteuerung (Heben oder Senken) erlaubt.

**12.** Elektromechanisches Stellglied (1) zur Betätigung eines mobilen Elements, das Hard- und Softwaremittel zur Umsetzung eines Verfahrens nach einem der vorangehenden Ansprüche umfasst, wobei die Mittel einen Steuerblock, einen Motor (10), eine Differentialbremse (20), ein Getriebe (30) und Mittel zur Abschätzung oder Messung des Drehmoments (63) umfassen und erlauben, die Schwankungen des Motordrehmoments zu analysieren und auf die Steuerung des Motors und des Steuerblocks einzuwirken, was dem Stellglied erlaubt, gemäß dem Wert eines Parameters unterschiedlich zu reagieren, wobei das Stellglied eine erste Funktion aufweist, die von einem ersten Softwaremodul bestimmt wird, wobei eine erste Bestimmungslogik einer Endlage oder eines Hindernisses umgesetzt wird, wenn die Last, mit der das Stellglied verbunden ist, geführt wird und eine zweite Funktion aufweist, die von einem zweiten Softwaremodul bestimmt wird, das eine zweite Bestimmungslogik einer Endlage oder eines Hindernisses umsetzt, wenn die Last, mit der das Stellglied verbunden ist, führend ist.

**13.** Stellglied nach vorangehendem Anspruch, **dadurch gekennzeichnet, dass** die Hard- und Softwaremittel einen Speicher (POS) zur Registrierung der Positionen des Stellglieds, in denen die Last führend ist und der Positionen des Stellglieds, in denen die Last geführt wird, umfassen.

Fig. 1

Fig. 2

EP 2 201 674 B1

**Fig. 3**

Mesurer un paramètre de fonctionnement EV influencé par la valeur instantanée du couple de sortie TACT, et en déduire une variation ΔEV — E1

Obtenir une information sur l'état mené (S1) ou menant (S2) de la charge — E2

S1

S2

P1 — Obstacle si ΔEV > TH1

P2 — Obstacle si ΔEV > TH2

**Fig. 4**

E2

E21 — S1 si EV < ET

E22 — S2 si EV > ET

**Fig. 5**

Moyenne pondérée

EVUP        ET        EVDN

x KUP                  x KDN        EV

**Fig. 6**

2 x HYS

>>>>>> Processus P1 >>>>>>>>>>>

ET

EV

<<<<<<<<< Processus P2 <<<<<<<

13

**RÉFÉRENCES CITÉES DANS LA DESCRIPTION**

**Documents brevets cités dans la description**

- US 6741052 B
- US 6940240 B
- US 6870334 B
- EP 1530284 A
- FR 2898994
- FR 2849300
- EP 0976909 A